# NEUE EUROPÄISCHE PATENTSCHRIFT

(11) **EP 3 279 614 B2**
(45) Veröffentlichungstag und Bekanntmachung des Hinweises auf die Entscheidung über den Einspruch: **12.10.2022**
(45) Hinweis auf die Patenterteilung: 28.08.2019
(21) Anmeldenummer: 17169506.7
(22) Anmeldetag: 04.05.2017
(51) Int. Cl.: G01D 5/244, G01D 5/245, G01D 3/08, G08C 15/06

(54) **POSITIONSMESSEINRICHTUNG UND VERFAHREN ZUM BETREIBEN EINER POSITIONSMESSEINRICHTUNG**
POSITION MEASURING DEVICE AND METHOD FOR OPERATING SAME
DISPOSITIF DE MESURE DE POSITION ET SON PROCÉDÉ DE FONCTIONNEMENT

(30) Priorität: 04.08.2016 DE 102016214456
(43) Veröffentlichungstag der Anmeldung: 07.02.2018
(73) Patentinhaber: Dr. Johannes Heidenhain GmbH, 83301 Traunreut (DE)
(72) Erfinder: MAYER, Elmar, 83365 Nußdorf (DE); WIEGAND, Andre, 83278 Traunstein (DE)
(74) Vertreter: Maikowski & Ninnemann Patentanwälte Partnerschaft mbB

(56) Entgegenhaltungen:
- WO-A2-2015/004472
- DE-A1- 4 400 482
- DE-A1-102006 007 871
- DE-A1-102008 049 140
- DE-A1-102009 024 020
- DE-A1-102011 079 961
- DE-C1- 19 853 452
- Anonymous: "iC-TW8 16-BIT SIN/COS Interpolator with Auto-Calibration", iC Haus, 3 August 2015 (2015-08-03), pages 1-67, Retrieved from the Internet: URL:https://web.archive.org/web/2015080319 4954/http:/www.ichaus.de/product/iCTW8

## Beschreibung

### GEBIET DER TECHNIK

Die vorliegende Erfindung betrifft eine Positionsmesseinrichtung gemäß Anspruch 1 bzw. 2, sowie ein Verfahren zum Betreiben einer Positionsmesseinrichtung gemäß Anspruch 4 bzw. 5.

### STAND DER TECHNIK

Inkrementale Positionsmesseinrichtungen werden in der Automatisierungstechnik und insbesondere bei Werkzeugmaschinen dazu eingesetzt, Positionsänderungen von beweglichen Teilen zu messen. So messen inkrementale Drehgeber rotatorische Bewegungen, beispielsweise von sich drehenden Wellen. Inkrementale Längenmessgeräte dagegen messen lineare Verschiebungen zueinander beweglich angeordneter Maschinenteile.

In bekannten inkrementalen Positionsmesseinrichtungen wird eine Teilungsspur, die aus regelmäßig angeordneten Codeelementen besteht, von einer Detektoreinheit abgetastet. Dabei können verschiedenste physikalische Abtastprinzipien zum Einsatz kommen, beispielsweise optische, magnetische, induktive oder kapazitive. Die aus der Abtastung resultierenden Detektorsignale sind bei gleichförmiger Bewegung (konstante Geschwindigkeit, bzw. konstante Drehzahl) bevorzugt weitgehend sinusförmig, die Positionsinformation kann beispielsweise durch Zählen der zurückgelegten Signalperioden oder, wenn eine erhöhte Auflösung gefordert ist, zusätzlich durch Unterteilung der Signalperioden in eine Anzahl von Längen- bzw. Winkelsegmenten (Interpolation) gewonnen werden. Eine Richtungsinformation kann erhalten werden, wenn bei der Abtastung zwei Detektorsignale erzeugt werden, die eine Phasenverschiebung, z.B. 90°, zueinander aufweisen. Um einen absoluten Bezugspunkt für die prinzipbedingt relative Positionsmessung inkrementaler Positionsmesseinrichtungen zu schaffen, wird häufig an wenigstens einer Position ein Referenzimpuls erzeugt. Hierfür kann auf einer separaten Teilungsspur eine geeignete Teilungsstruktur angeordnet sein, die ebenfalls von der Detektoreinheit abgetastet wird.

Die von der Detektoreinheit gewonnenen Detektorsignale werden in einer Signalverarbeitungseinheit verarbeitet und entsprechend einer Spezifikation einer Ausgangsschnittstelle angepasst. Eine bekannte Schnittstelle für inkrementale Positionsmesseinrichtungen erfordert beispielsweise für die Inkrementalsignale einen Spitze-Spitze-Wert von 1V. Die Signale sind bei konstanter Bewegungsgeschwindigkeit (Drehzahl) weitgehend sinusförmig und verlaufen symmetrisch um ein Bezugspotential (meist Massepotential 0V). Die Phasenverschiebung zwischen den inkrementalen Positionssignalen beträgt 90°. Der Referenzimpuls RI ist symmetrisch und sein Maximum liegt an einer definierten Position bezogen auf die inkrementalen Positionssignale.

Die Signalverarbeitungseinheit kann alterungsbedingte Veränderungen der von der Detektoreinheit gewonnenen Detektorsignale, wie eine Verringerung der Signalamplituden, in weiten Grenzen ausgleichen. Nachteilig an dieser Vorgehensweise ist es, dass, wenn die Regelgrenzen der Signalverarbeitungseinheit erreicht sind, nur eine kurze Vorlaufzeit bleibt, bis die Positionsmesseinrichtung gewartet, bzw. ausgetauscht werden muss. Darüber hinaus erschwert die Optimierung der Detektorsignale durch die Signalverarbeitungseinheit die Justierung der Detektoreinheit bezogen auf die Messteilung, da schon bei einem noch ungenauen Anbau stark fehlerbehafteter Detektorsignale bereits optimale Positionssignale erhalten werden können.

Die DE 195 21 252 A1 offenbart eine Positionsmesseinrichtung, bei der bei einer Störung ein oder mehrere Ausgänge eines Ausgangsverstärkers hochohmig schaltbar sind. Dies führt jedoch zu einem sofortigen Notstop der Anlage, so dass keine Möglichkeit für eine präventive Wartung besteht.

DE 10 2011 079961 A1 befasst sich mit einem Winkelmessgerät.

DE 10 2008 049140 A1 befasst sich mit der Erzeugung eines Referenzimpulses an definierter Stelle.

Die DE 10 2009 024 020 A1 beschreibt ein Erfassungssystem für Drehungen, bei dem empfangene Sensorsignale in einer Korrektureinheit mit gespeicherten Signalen verglichen und korrigiert werden.

Die DE 10 2006 007 871 A1 beschreibt einen Encoder, bei dem Fehler bei Sensorausgangssignalen korrigiert oder unwirksam gemacht werden. Indem die Sensorausgangssignale aber unwirksam gemacht werden, wird auch hier ein Notstop erzwungen.

### ZUSAMMENFASSUNG DER ERFINDUNG

Es ist Aufgabe der Erfindung, eine verbesserte Positionsmesseinrichtung zu schaffen, bei der Signalfehler frühzeitig signalisierbar sind.

Diese Aufgabe wird gelöst durch eine Positionsmesseinrichtung nach Anspruch 1 bzw. 2.

Vorteilhafte Ausgestaltungen einer erfindungsgemäßen Positionsmesseinrichtung ergeben sich aus Anspruch 3.

Weiter ist es Aufgabe der Erfindung, ein Verfahren anzugeben, bei dem Signalfehler einer Positionsmesseinrichtung frühzeitig signalisiert werden.

Diese Aufgabe wird gelöst durch ein Verfahren zum Betreiben einer Positionsmesseinrichtung nach Anspruch 4 bzw. 5.

Vorteilhafte Ausgestaltungen des erfindungsgemäßen Verfahrens ergeben sich aus den von Anspruch 4 bzw. 5 abhängigen Ansprüchen.

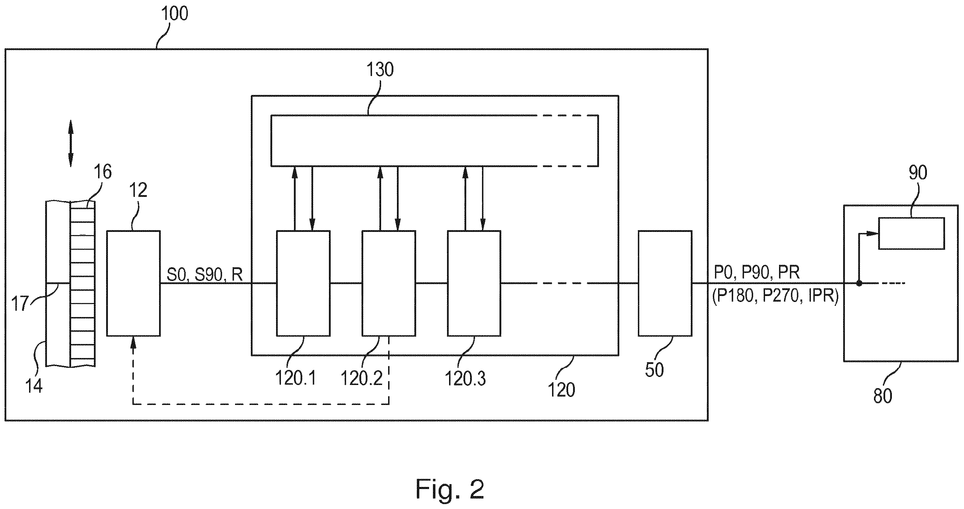

Weitere Vorteile ergeben sich aus der nachfolgenden Beschreibung der Ausführungsbeispiele, wobei Figur 2 kein erfindungsgemäßes Beispiel zeigt.

### KURZE BESCHREIBUNG DER ZEICHNUNGEN

Es zeigt
- Figur 1: ein erstes Ausführungsbeispiel einer erfindungsgemäßen Positionsmesseinrichtung,
- Figur 2: ein zweites Beispiel einer Positionsmesseinrichtung und
- Figur 3: den Signalverlauf eines Amplitudenwertes eines inkrementalen Abtastsignals, bzw. eines Positionssignals über der Zeit.

### BESCHREIBUNG DER AUSFÜHRUNGSFORMEN

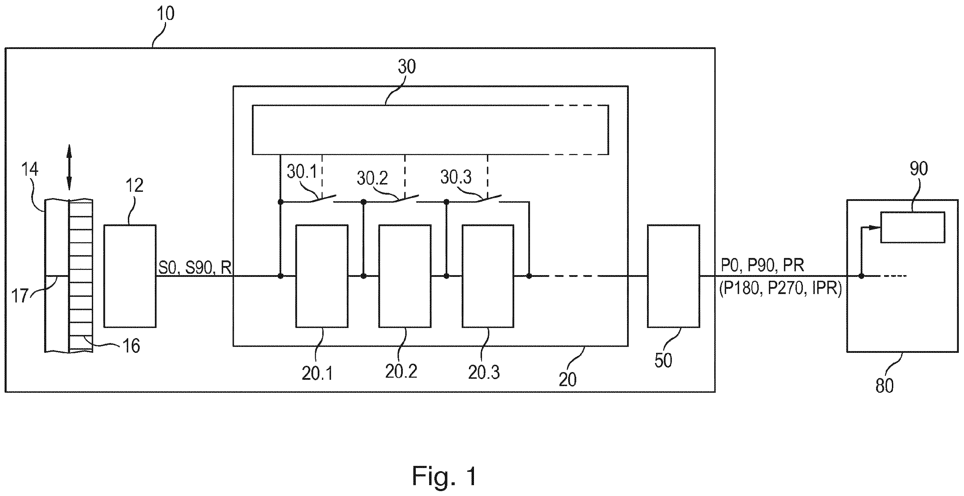

Figur 1 zeigt ein Blockdiagramm einer erfindungsgemäßen Positionsmesseinrichtung 10. Sie umfasst eine Abtasteinheit 12, die geeignet ausgestaltet ist, um eine Messteilung auf einem Teilungsträger 14 abzutasten. Teilungsträger 14 und Abtasteinheit 12 sind dabei in bekannterWeise in einer Messrichtung relativ zueinander beweglich angeordnet, beispielsweise indem sie mit beweglichen Teilen einer Werkzeugmaschine verbunden sind, deren Relativposition zueinander bestimmt werden soll.

Es können sowohl lineare (Längenmessgeräte), als auch rotatorische Positionsmesseinrichtungen (Drehgeber oder Winkelmessgeräte) erfindungsgemäß ausgeführt werden. Ebenso ist die vorliegende Erfindung weitgehend unabhängig vom physikalischen Abtastprinzip. So kann eine optische, magnetische, kapazitive oder induktive Abtastung zum Einsatz kommen.

Im dargestellten Beispiel besteht die Messteilung aus einer Inkrementalteilungsspur 16 und einer Referenzteilungsspur 17. Aus der Abtastung der Messteilung 16, 17 resultieren Abtastsignale S0, S90, R, die zwei um 90° phasenverschobene Inkrementalsignale S0, S90 aus der Abtastung der Inkrementalteilungsspur 16, sowie ein Referenzsignal R aus der Abtastung der Referenzteilungsspur 17 umfassen. Je nach Abtastprinzip kann in der Abtasteinheit 12 zur Erzeugung der Abtastsignale S0, S90, Reine Vorverarbeitung von Detektorsignalen stattfinden, beispielsweise ein Umwandlung von Strom- in Spannungssignale.

Die Inkrementalsignale S0, S90 sind bei gleichförmiger Bewegung (entsprechend einer konstanten Geschwindigkeit) der Messteilung gegenüber der Abtasteinheit 12 weitgehend sinusförmig. Das Referenzsignal R dient dazu, eine absolute Bezugsposition für die prinzipbedingt relative Positionsmessung der inkrementalen Positionsmesseinrichtung 10 zu liefern. Hierfür weist das Referenzsignal R an wenigstens einer definierten Position (bzw. im Falle eines Winkelmessgeräts an einer definierten Winkelstellung) einen Impuls auf, der als Referenzimpuls bezeichnet wird.

Die Abtastsignale S0, S90, R sind einer Signalverarbeitungseinheit 20 zugeführt, die diese zu Positionssignalen P0, P90, PR verarbeitet. Hierzu umfasst die Signalverarbeitungseinheit 20 wenigstens eine, im dargestellten Beispiel drei Korrektureinheiten 20.1, 20.2, 20.3, jeweils geeignet zur Korrektur von Signalfehlern wenigstens eines der Abtastsignale. Konkret handelt es sich um eine Offset-Korrektureinheit 20.1, eine Amplituden-Korrektureinheit 20.2 und eine Phasen-Korrektureinheit 20.3.

Die Offset-Korrektureinheit 20.1 dient dazu, einen Signaloffset der Inkrementalsignale S0, S90 zu korrigieren, so dass die Minimal- und Maximalwerte der sinusförmigen Signale symmetrisch um ein Bezugspotential (meist Massepotential 0V) angeordnet sind. Sie kann auch ausgestaltet sein, um ein Ruhepotential des Referenzsignals R einzustellen, also das Potential, das das Referenzsignal R aufweist, solange kein Referenzimpuls auftritt.

Die Amplituden-Korrektureinheit 20.2 dient dazu, die Signalamplituden der Inkrementalsignale auf definierte Werte zu verstärken, beispielsweise auf einen Spitze-Spitze-Wert von 1V. Hierfür können Verstärkerbauelemente eingesetzt werden. Ebenso kann die Amplituden-Korrektureinheit 20.2 ausgestaltet sein, um die Amplitude des Referenzimpulses R auf einen definierten Wert einzustellen.

Die Phasen-Korrektureinheit 20.3 ist geeignet ausgestaltet, um die Phasenverschiebung zwischen den Inkrementalsignalen einzustellen, beispielsweise auf 90°, wobei die Bewegungsrichtung (Drehrichtung) bestimmt, welches der Signale vor- bzw. nacheilt. Die Phasen-Korrektureinheit 20.3 kann darüber hinaus dazu vorgesehen sein, die Lage des Referenzimpulses bezogen auf die Inkrementalsignale einzustellen, beispielsweise so, dass sein Maximum an einer Position liegt bei der die Inkrementalsignale positive Werte und den gleichen Momentanwert aufweisen.

Die auf diese Weise korrigierten Abtastsignale werden als Positionssignale P0, P90, PR über eine Signalschnittstelle 50 an eine Folgeelektronik 80, beispielsweise einer numerischen Steuerung einer Werkzeugmaschine, ausgegeben. Im Rahmen der Einstellgenauigkeit der Korrektureinheiten 20.1, 20.2, 20.3 entsprechen die Positionssignale P0, P90, PR genau den Idealwerten der Schnittstellenspezifikation. Die Signalschnittstelle 50 kann Treiberbausteine umfassen, die die Positionssignale P0, P90, PR für die Ausgabe an die Folgeelektronik verstärken. Die Treiberbausteine können geeignet ausgestaltet sein, um die Positionssignale P0, P90, PR sowohl in der von der Signalverarbeitungseinheit 20 erzeugten Polarität, als auch als invertierte Positionssignale P180, P270, IPR auszugeben.

Erfindungsgemäß ist in der Signalverarbeitungseinheit 20 eine Überwachungseinheit 30 angeordnet. Diese ist geeignet ausgestaltet um festzustellen, ob einer der in den Korrektureinheiten 20.1, 20.2, 20.3 korrigierten Signalfehler der Abtastsignale S0, S90, R einen Grenzwert erreicht, bzw. über- oder unterschreitet. Ist das der Fall, so schaltet die Überwachungseinheit 30 in einen Signalisierungsmodus und deaktiviert wenigstens die zu diesem Signalfehler korrespondierende Korrektureinheit 20.1, 20.2, 20.3, wobei unter deaktivieren in diesem Ausführungsbeispiel zu verstehen ist, dass die entsprechende Korrektureinheit 20.1, 20.2, 20.3 in einen Grundzustand geschaltet wird, also keine Korrektur mehr durchführt. Dies hat zur Folge, dass die Positionssignale P0, P90, PR wenigstens den Signalfehler aufweisen, der zur Umschaltung in den Signalisierungsmodus geführt hat. Sinkt also beispielsweise die Amplitude eines der Abtastsignale S0, S90, R unter einen Grenzwert, so wird die Amplituden-Korrektureinheit 20.2 deaktiviert, steigt der Offset eines der Abtastsignale S0, S90, R über einen Grenzwert, so wird die Offset-Korrektureinheit 20.1 deaktiviert usw.

Die Grenzwerte sind mit Vorteil so gewählt, dass die Folgeelektronik 80 die Positionssignale P0, P90, PR noch auswerten kann, d.h. dass die Maschine, an der die Positionsmesseinrichtung 10 betrieben wird, funktionsfähig bleibt.

In einer vorteilhaften Ausgestaltung deaktiviert die Überwachungseinheit 30 in einem derartigen Fehlerfall alle Korrektureinheiten 20.1, 20.2, 20.3, so dass als Positionssignale P0, P90, PR die Abtastsignale S0, S90, R ausgegeben werden. Für die Deaktivierung der Korrektureinheiten 20.1, 20.2, 20.3 sind Schaltmittel 30.1, 30.2, 30.3 vorgesehen.

Seitens der Folgeelektronik 80 ist eine empfängerseitige Überwachungseinheit 90 vorgesehen, die die Positionssignale P0, P90, PR überwacht und die durch die Abschaltung einer oder mehrerer Korrektureinheiten 20.1, 20.2, 20.3 bedingte sprunghafte Änderung einer oder mehrerer Fehlergrößen feststellt und einer Bedienperson der Anlage anzeigt, beispielsweise durch Ausgabe einer Warnmeldung auf einem Monitor. Die empfängerseitige Überwachungseinheit 90 kann, wie in Figur 1 dargestellt, innerhalb der Folgeelektronik 80 angeordnet sein, es kann sich aber auch um ein separates Gerät handeln.

Die erfindungsgemäße Ausgestaltung einer Positionsmesseinrichtung 10 hat zwei praxisrelevante Auswirkungen: erstens kann auf diese Weise der Folgeelektronik 80 signalisiert werden, dass mit einem baldigen Ausfall der Positionsmesseinrichtung 10 gerechnet werden muss, bzw. dass die Positionsmesseinrichtung 10 gewartet werden muss, um einem Ausfall vorzubeugen. Wartung kann in diesem Fall bedeuten, dass die Messteilung 16, 17 und/oder die Abtasteinheit 12 gereinigt werden muss, oder dass die Position der Abtasteinheit 12 bezogen auf die Messteilung 16, 17 neu eingestellt werden muss. Zweitens kann der Signalisierungsmodus dazu genutzt werden, um bei der Inbetriebnahme der Positionsmesseinrichtung 10 die Position der Abtasteinheit 12 gegenüber der Messteilung 16, 17 überhaupt erst optimal einstellen zu können, so dass auch ohne Korrektur bereits möglichst genaue Positionssignale P0, P90, PR erhalten werden. Wären die Korrektureinheiten 20.1, 20.1, 20.3 immer aktiv, so würde bereits eine grobe Positionierung der Abtasteinheit 12 gegenüber der Messteilung ausreichen, um verwertbare Positionssignale P0, P90, PR zu erlangen. Allerdings kann es in diesem Fall vorkommen, dass eines oder mehrere der Abtastsignale S0, S90, R die vorgeschriebenen Grenzwerte nur knapp einhalten. Eine Justierung bei aktiven Korrektureinheiten 20.1, 20.1, 20.3 ist daher nicht praxisgerecht.

Das Umschalten in den Signalisierungsmodus kann künstlich ausgelöst werden, indem die für die Abtastung verwendeten Signale gedämpft oder unterbrochen werden. Das kann erreicht werden, indem die Abtasteinheit 12 bei der Inbetriebnahme so weit von der Messteilung 16, 17 entfernt wird, dass ein oder mehrere Grenzwerte von Signalfehlern erreicht, bzw. über- oder unterschritten werden. Das ist besonders bei sog. offenen Längenmesseinrichtungen einfach durchführbar, weil hier üblicherweise Maßstab (Teilungsträger 14) und Abtasteinheit 12 getrennt geliefert und montiert werden. Eine weitere Möglichkeit ist es, zwischen Abtasteinheit 12 und Messteilung 16, 17 Dämpfungs- oder Unterbrechungsmittel einzubringen. So kann bei einer optischen Abtastung der Lichtweg zwischen einer Lichtquelle und entsprechenden Photodetektoren durch eine Folie etc. unterbrochen werden. Bei einer magnetischen Abtastung kann ein ferromagnetisches Material zwischen der Messteilung 16, 17 und den Magnetsensoren eingebracht werden, usw.

Mit Vorteil können deaktivierte Korrektureinheiten 20.1, 20.2, 20.3 erst durch Aus- und Wiedereinschalten der Positionsmesseinrichtung 10 wieder aktiviert werden.

Figur 2 zeigt eine weitere Positionsmesseinrichtung 100. Komponenten, die bereits in Verbindung mit Figur 1 beschrieben wurden, tragen das gleiche Bezugszeichen.

Auch in diesem Beispiel umfasst eine Signalverarbeitungseinheit 120 eine Offset-Korrektureinheit 120.1, eine Amplituden-Korrektureinheit 120.2 und eine Phasen-Korrektureinheit 120.3. Abweichend zum vorhergehend beschriebenen Beispiel signalisieren aber jetzt die Korrektureinheiten 120.1, 120.2, 120.3 der Überwachungseinheit 130 das Erreichen, bzw. Über- oder Unterschreiten eines Grenzwertes. Ist das der Fall, so deaktiviert die Überwachungseinheit 130 wiederum wenigstens die zu diesem Signalfehler korrespondierende Korrektureinheit 120.1, 120.2, 120.3 oder auch alle Korrektureinheiten 120.1, 120.2, 120.3. Das Deaktivieren erfolgt jetzt jedoch nicht durch Abschalten, bzw. Überbrücken der jeweiligen Korrektureinheit 120.1, 120.2, 120.3, sondern durch Außerkraftsetzen der Korrekturfunktion, indem aktuelle Regelparameter gespeichert werden und so die Funktion der Korrektureinheit 120.1, 120.2, 120.3 quasi eingefroren wird. Dies hat zur Folge, dass beim Übergang in den Signalisierungsmodus nicht unmittelbar eine Änderung der Positionssignale P0, P90, PR auftritt, sondern erst bei einem weiteren Anstieg der Signalfehler eine Änderung erkennbar ist.

Wie durch den gestrichelt gezeichneten Pfeil von der Amplituden-Korrektureinheit 120.2 zur Abtasteinheit 12 angedeutet, kann eine Korrektur von Signalfehlern auch durch direktes Einwirken auf die Abtasteinheit 12 erfolgen. So kann beispielsweise beim optischen Abtastprinzip die Signalamplitude der Abtastsignale S0, S90, R durch Erhöhen des Stroms für den Betrieb der Lichtquelle vergrößert werden. Auch wenn in diesem Fall die Abtastsignale S0, S90, R nicht mehr physikalisch messbar vorhanden sind, sind darunter weiterhin die Signale zu verstehen, die ohne Einfluss der Korrektureinheiten 120.1, 120.2, 120.3 von der Abtasteinheit 12 erzeugt würden. Dies gilt selbstverständlich auch für das erste Ausführungsbeispiel.

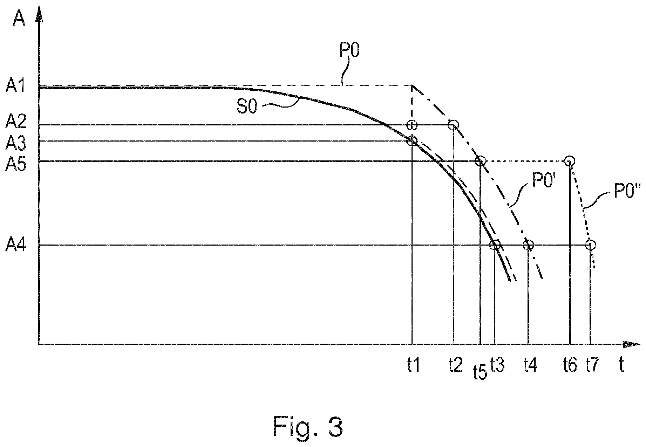

Figur 3 zeigt am Beispiel des Signalverlaufs des Amplitudenwertes A des inkrementalen Abtastsignals S0, bzw. des Positionssignals P0 über der Zeit die Vorteile der beiden Ausführungsbeispiele, die anhand der Figuren 1 und 2 erläutert wurden. Die gestrichelt gezeichnete Kurve stellt das Positionssignal P0 entsprechend dem Ausführungsbeispiel nach Figur 1 dar, die strichpunktiert gezeichnete Kurve den alternativen Verlauf des Positionssignals P0' nach dem Beispiel von Figur 2. Die dargestellten Kurven umfassen, je nach Betriebsbedingungen der Positionsmesseinrichtung 10, 100, eine Zeitspanne von vielen Jahren.

Nach der Inbetriebnahme der Positionsmesseinrichtung 10, 100 weist das Abtastsignal S0 (und auch das Positionssignal P0) eine Anfangsamplitude A1 auf. Im Verlauf der Lebensdauer der Positionsmesseinrichtung 10, 100 verringert sich die Amplitude, insbesondere bei einem optischen Abtastprinzip durch eine Verschlechterung der Leuchtstärke der Lichtquelle oder durch eine kontinuierlich zunehmende Verschmutzung der Messteilung.

Der Grenzwert A2 ist derjenige Amplitudenwert, bei dem die empfängerseitige Überwachungseinheit 90 seitens der Folgeelektronik 80 eine Verringerung der Amplitude erkennt und ein Warnsignal generiert.

Der Grenzwert A3 ist derjenige Amplitudenwert, bei dessen Erreichen, bzw. Unterschreiten die Überwachungseinheit 30 die Positionsmesseinrichtung 10, 100 in den Signalisierungsmodus schaltet.

Der Grenzwert A4 ist schließlich der kleinste Amplitudenwert, der von der Folgeelektronik 80 noch auswertbar ist. Die Unterschreitung des Grenzwertes A4 führt zu einem Ausfall der Anlage, in der die Positionsmesseinrichtung 10, 100 betrieben wird.

Zu einem Zeitpunkt t1 erreicht nun das Abtastsignal S0 den Grenzwert A3 und die Positionsmesseinrichtung 10, 100 schaltet in den Signalisierungsmodus und deaktiviert die Amplituden-Korrektureinheit 20.2, bzw. 120.2. Dies führt bei der Positionsmesseinrichtung 10, die entsprechend dem Ausführungsbeispiel von Figur 1 ausgestaltet ist, zu einer sprunghaften Verringerung des Positionssignals P0, die wegen einer Unterschreitung des Grenzwerts A2 seitens der Folgeelektronik 80 sofort erkannt wird. Die Positionsmesseinrichtung 10 kann aber noch bis zum Zeitpunkt t3 betrieben werden, so dass ausreichend Zeit bleibt, um im Zuge eines üblichen Wartungsintervalls die Positionsmesseinrichtung 10 zu warten oder auszutauschen.

Bei der Positionsmesseinrichtung 100 entsprechend dem Beispiel von Figur 2 dagegen folgt das Positionssignal P0' ab dem Zeitpunkt der Umschaltung weitgehend dem Verlauf des Abtastsignals S0 und erreicht den Grenzwert A2 erst zu einem Zeitpunkt t2. Auch hier bleibt bis zum Ausfall der Positionsmesseinrichtung 100 zum Zeitpunkt t4 ausreichend Zeit für deren Wartung oder Austausch. Da sich die Verringerung der Amplitude von Abtastsignalen S0 gegen Ende der Lebensdauer meist beschleunigt, ist die Zeitspanne zwischen den Zeitpunkten t2 und t4 kürzer als die Zeitspanne zwischen den Zeitpunkten t1 und t3 des ersten Ausführungsbeispiels. Andererseits wird das Ende der Lebensdauer der Positionsmesseinrichtung 10 des ersten Ausführungsbeispiels zum Zeitpunkt t3 früher erreicht als das Ende der Lebensdauer der Positionsmesseinrichtung 100 des zweiten Beispiels.

Würde dagegen die Korrektureinheit 20.1, 20.2, 20.3, 120.1, 120.2, 120.3 bis zum Erreichen ihrer Regelgrenze betrieben, würde sich die Zeit zwischen Erkennen einer bevorstehenden Betriebsstörung und dem Erreichen des Lebensdauerendes der Positionsmesseinrichtung 10, 100 soweit verkürzen, dass eine Reaktion in Form einer Wartung oder eines Austausches innerhalb eines Standard-Wartungsintervalls nicht mehr möglich wäre.

Eine weitere Verbesserung der Positionsmesseinrichtung 100 kann erreicht werden, wenn im Beispiel von Figur 2 die Überwachungseinheit 130 zusätzlich geeignet ausgestaltet ist, um bei Erreichen eines zweiten Grenzwerts A5 (zum Zeitpunkt t5) wenigstens die das Ereignis auslösende Korrektureinheit (im Beispiel von Figur 3 die Amplituden-Korrektureinheit 120.2) wieder zu aktivieren und zwar mit einem Sollwert der Regelung, der eine schlechtere Signalqualität der Positionssignale P0, P90, PR darstellt. Im dargestellten Beispiel wird der Sollwert der Regelung auf den zweiten Grenzwert A5 gesetzt, so dass sich der als gepunktete Linie dargestellte alternative Amplitudenverlauf des Positionssignals P0" ergibt. Auf diese Weise kann die Amplitude des Positionssignals P0" auf dem Niveau des zweiten Grenzwertes A5 bis zum Erreichen der Regelgrenze zum Zeitpunkt t6 gehalten werden. Nach diesem Zeitpunkt fällt die Amplitude des Positionssignals P0" rasch ab und erreicht den Grenzwert A4 für den sicheren Betrieb der Anlage zum Zeitpunkt t7.

Analog hierzu kann das Erreichen des zweiten Grenzwerts A5 natürlich auch durch Überwachung des Abtastsignals S0 erfolgen. Ebenso kann dieses Verfahren auf andere Signalfehler angepasst zum Einsatz kommen und kann auch auf das erste Ausführungsbeispiel abgebildet werden.

Dieses Vorgehen führt sowohl zu einer längeren erreichbaren Betriebsdauer der Positionsmesseinrichtung 100, als auch zu einer erhöhten Sicherheit bei der Auswertung des Positionssignals P0" in der Folgeelektronik 80, da die Gefahr eines Verarbeitungsfehlers in der Folgeelektronik 80 steigt, je weiter sich die Amplitude des Positionssignals P0" der Funktionsgrenze A4 annähert.

Besonders geeignet ist diese Vorgehensweise bei optischen Abtastprinzipien, bei denen, wie oben erwähnt, die Erhöhung der Signalamplitude der Positionssignale P0, P90, PR mit der Amplituden-Korrektureinheit 120.2 sowohl durch Verstärkung der Abtastsignale S0, S90, R mit Verstärkerbauelementen, als auch durch Erhöhung des Betriebsstroms der eingesetzten Lichtquelle erfolgen kann. Da sich die Erhöhung des Betriebsstroms einer Lichtquelle meist negativ auf ihre Lebensdauer auswirkt, kann beispielsweise die Korrektur der Signalamplitude bis zum Erreichen des ersten Grenzwerts A3 vorwiegend durch Regelung des Stroms der Lichtquelle und ab dem Erreichen des zweiten Grenzwerts A5 vorwiegend durch Verstärkung mittels Verstärkerbauelementen erfolgen.
Die Signalverarbeitungseinheit 20, 120 ist mit Vorteil zumindest teilweise als programmierbarer Baustein (FPGA) oder applikationsspezifischer integrierter Schaltkreis (ASIC) ausgeführt. Ebenso ist es vorteilhaft, Funktionen der Signalverarbeitungseinheit 20, 120 ganz oder teilweise durch den Einsatz eines Mikroprozessors, insbesondere Signalprozessors, zu realisieren. Neben den beschriebenen Funktionen kann die Signalverarbeitungseinheit 20, 120 noch Verarbeitungsschritte vornehmen.

Die vorliegende Erfindung ist selbstverständlich nicht auf die beschriebenen Ausführungsbeispiele beschränkt, sondern kann von einem Fachmann im Rahmen der Ansprüche alternativ ausgestaltet werden.

## Patentansprüche

1. Positionsmesseinrichtung, umfassend einen Teilungsträger (14) mit einer Messteilung (16, 17), eine Abtasteinheit (12), die in einer Messrichtung relativ zur Messteilung (16, 17) beweglich angeordnet ist, zur Erzeugung von positionsabhängigen Abtastsignalen (S0, S90, R) durch Abtastung der Messteilung (16, 17), eine Signalverarbeitungseinheit (20, 120) zur Verarbeitung der Abtastsignale (S0, S90, R) zu Positionssignalen (P0, P90, PR) und eine Signalschnittstelle (50) über die die Positionssignale (P0, P90, PR) zu einer Folgeelektronik (80) ausgebbar sind,
wobei in der Signalverarbeitungseinheit (20, 120) wenigstens eine Korrektureinheit (20.1, 20.2, 20.3; 120.1, 120.2, 120.3) angeordnet ist, mit der wenigstens ein Signalfehler wenigstens eines Abtastsignals (S0, S90, R) korrigierbar ist, sowie eine Überwachungseinheit (30, 130), mit der das Erreichen eines Grenzwerts des Signalfehlers feststellbar und darauffolgend wenigstens die zu diesem Signalfehler korrespondierende Korrektureinheit (20.1, 20.2, 20.3; 120.1, 120.2, 120.3) deaktivierbar ist, und
wobei von der Überwachungseinheit (30) die Korrektureinheit (20.1, 20.2, 20.3) durch deren Abschaltung deaktivierbar ist, so dass das Abtastsignal (S0, S90, R) als Positionssignal (P0, P90, PR) ausgegeben wird.

2. Positionsmesseinrichtung, umfassend einen Teilungsträger (14) mit einer Messteilung (16, 17), eine Abtasteinheit (12), die in einer Messrichtung relativ zur Messteilung (16, 17) beweglich angeordnet ist, zur Erzeugung von positionsabhängigen Abtastsignalen (S0, S90, R) durch Abtastung der Messteilung (16, 17), eine Signalverarbeitungseinheit (20, 120) zur Verarbeitung der Abtastsignale (S0, S90, R) zu Positionssignalen (P0, P90, PR) und eine Signalschnittstelle (50) über die die Positionssignale (P0, P90, PR) zu einer Folqeelektronik (80) ausgebbar sind,
wobei in der Signalverarbeitungseinheit (20, 120) wenigstens eine Korrektureinheit (20.1, 20.2, 20.3; 120.1, 120.2, 120.3) angeordnet ist, mit der wenigstens ein Signalfehler wenigstens eines Abtastsignals (S0, S90, R) korrigierbar ist, sowie eine Überwachungseinheit (30, 130) mit der das Erreichen eines Grenzwerts des Signalfehlers feststellbar und darauffolgend wenigstens die zu diesem Signalfehler korrespondierende Korrektureinheit (20.1, 20.2, 20.3; 120.1, 120.2, 120.3) deaktivierbar ist, insbesondere nach Anspruch 1, und
wobei die Überwachungseinheit (30, 130) zusätzlich geeignet ausgestaltet ist, um bei Erreichen eines zweiten Grenzwerts (A5) wenigstens die das Ereignis auslösende Korrektureinheit (20.1, 20.2, 20.3; 120.1, 120.2, 120.3) wieder zu aktivieren und zwar mit einem Sollwert der Regelung, mit dem eine schlechtere Signalqualität der Positionssignale (P0, P90, PR) erreichbar ist, als mit der Regelung bis zum ersten Grenzwert.

3. Positionsmesseinrichtung nach einem der vorhergehenden Ansprüche, wobei die wenigstens eine Korrektureinheit (20.1, 20.2, 20.3; 120.1, 120.2, 120.3) eine Offset-Korrektureinheit (20.1, 120.1), eine Amplituden-Korrektureinheit (20.2, 120.2) oder eine Phasen-Korrektureinheit (20.3, 120.3) ist.

4. Verfahren zum Betreiben einer Positionsmesseinrichtung, umfassend einen Teilungsträger (14) mit einer Messteilung (16, 17), eine Abtasteinheit (12), die in einer Messrichtung relativ zur Messteilung (16, 17) beweglich angeordnet ist und mit der durch Abtastung der Messteilung (16, 17) positionsabhängige Abtastsignale (S0, S90, R) erzeugt werden, eine Signalverarbeitungseinheit (20, 120) in der Abtastsignale (S0, S90, R) zu Positionssignalen (P0, P90, PR) verarbeitet werden und eine Signalschnittstelle (50) über die die Positionssignale (P0, P90, PR) zu einer Folgeelektronik (80) ausgegeben werden,
wobei in der Signalverarbeitungseinheit (20, 120) wenigstens eine Korrektureinheit (20.1, 20.2, 20.3; 120.1, 120.2, 120.3) angeordnet ist, mit der wenigstens ein Signalfehler wenigstens eines Abtastsignals (S0, S90, R) korrigiert wird, sowie eine Überwachungseinheit (30, 130) mit der das Erreichen eines Grenzwerts des Signalfehlers festgestellt wird und von der darauffolgend wenigstens die zu diesem Signalfehler korrespondierende Korrektureinheit (20.1, 20.2, 20.3; 120.1, 120.2, 120.3) deaktiviert wird, und
wobei die Überwachungseinheit (30) die Korrektureinheit (20.1, 20.2, 20.3) durch deren Abschaltung deaktiviert, so dass das Abtastsignal (S0, S90, R) als Positionssignal (P0, P90, PR) ausgegeben wird.

5. Verfahren zum Betreiben einer Positionsmesseinrichtung, umfassend einen Teilungsträger (14) mit einer Messteilung (16, 17), eine Abtasteinheit (12), die in einer Messrichtunq relativ zur Messteilung (16, 17) beweglich angeordnet ist und mit der durch Abtastung der Messteilung (16, 17) positionsabhängige Abtastsignale (S0, S90, R) erzeugt werden, eine Signalverarbeitungseinheit (20, 120) in der Abtastsignale (S0, S90, R) zu Positionssignalen (P0, P90, PR) verarbeitet werden und eine Signalschnittstelle (50) über die die Positionssignale (P0, P90, PR) zu einer Folgeelektronik (80) ausgegeben werden,
wobei in der Signalverarbeitungseinheit (20, 120) wenigstens eine Korrektureinheit (20.1, 20.2, 20.3; 120.1, 120.2, 120.3) angeordnet ist, mit der wenigstens ein Signalfehler wenigstens eines Abtastsignals (S0, S90, R) korrigiert wird, sowie eine Überwachungseinheit (30, 130) mit der das Erreichen eines Grenzwerts des Signalfehlers festgestellt wird und von der darauffolgend wenigstens die zu diesem Signalfehler korrespondierende Korrektureinheit (20.1, 20.2, 20.3; 120.1, 120.2, 120.3) deaktiviert wird, insbesondere nach Anspruch 4, und
wobei von der Überwachungseinheit (30, 130) bei Erreichen eines zweiten Grenzwerts (A5) wenigstens die das Ereignis auslösende Korrektureinheit (20.1, 20.2, 20.3; 120.1, 120.2, 120.3) wieder aktiviert wird und zwar mit einem Sollwert der Regelung, mit dem eine schlechtere Signalqualität der Positionssignale (P0, P90, PR) erreichbar ist, als mit der Regelung bis zum ersten Grenzwert.

6. Verfahren nach einem der Ansprüche 4 oder 5, wobei die wenigstens eine deaktivierte Korrektureinheit (20.1, 20.2, 20.3; 120.1, 120.2, 120.3) durch Aus- und Wiedereinschalten der Positionsmesseinrichtung (10, 100) wieder aktiviert wird.

7. Signalübertragungssystem mit einer Positionsmesseinrichtung (10, 100) nach einem der Ansprüche 1 bis 3, angeschlossen an eine Folgeelektronik (80), wobei seitens der Folgeelektronik (80) eine empfängerseitige Überwachungseinheit (90) angeordnet ist, mit der das Erreichen eines Grenzwertes wenigstens eines Positionssignals (P0, P90, PR) feststellbar ist.

## Claims

1. Position measuring device comprising a graduation carrier (14) with a measurement graduation (16, 17), a scanning unit (12) which is movably arranged in a measuring direction relative to the measurement graduation (16, 17), for generating position-dependent scanning signals (S0, S90, R) by scanning the measurement graduation (16, 17), a signal processing unit (20, 120) for processing the scanning signals (S0, S90, R) to form position signals (P0, P90, PR), and a signal interface (50) which is adapted to output the position signals (P0, P90, PR) to downstream electronics (80),
wherein at least one correction unit (20.1, 20.2, 20.3; 120.1, 120.2, 120.3), which is adapted to correct at least one signal error of at least one scanning signal (S0, S90, R), and a monitoring unit (30, 130), which is adapted to determine when a threshold value of the signal error is reached and subsequently to deactivate at least the correction unit (20.1, 20.2, 20.3; 120.1, 120.2, 120.3) corresponding to this signal error, are arranged in the signal processing unit (20, 120), and
wherein the monitoring unit (30) is adapted to deactivate the correction unit (20.1, 20.2, 20.3) by switching it off, so that the scanning signal (S0, S90, R) is output as the position signal (P0, P90, R).

2. Position measuring device, comprising a graduation carrier (14) with a measurement graduation (16, 17), a scanning unit (12) which is movably arranged in a measuring direction relative to the measurement graduation (16, 17), for generating position-dependent scanning signals (S0, S90, R) by scanning the measurement graduation (16, 17), a signal processing unit (20, 120) for processing the scanning signals (S0, S90, R) to form position signals (P0, P90, PR), and a signal interface (50) which is adapted to output the position signals (P0, P90, PR) to downstream electronics (80), wherein at least one correction unit (20.1, 20.2, 20.3; 120.1, 120.2, 120.3), which is adapted to correct at least one signal error of at least one scanning signal (S0, S90, R), and a monitoring unit (30, 130), which is adapted to determine when a threshold value of the signal error is reached and subsequently to deactivate at least the correction unit (20.1, 20.2, 20.3; 120.1, 120.2, 120.3) corresponding to this signal error, are arranged in the signal processing unit (20, 120), in particular according to claim 1, and
wherein the monitoring unit (30, 130) additionally is adapted to reactivate at least the correction unit (20.1, 20.2, 20.3; 120.1, 120.2, 120.3) which triggers the event when a second threshold value (A5) is reached, namely with a desired control value which is adapted to achieve a poorer signal quality of the position signals (P0, P90, PR) than with the control up to the first threshold value.

3. Position measuring device according to one of the preceding claims, wherein the at least one correction unit (20.1, 20.2, 20.3; 120.1, 120.2, 120.3) is an offset correction unit (20.1, 120.1), an amplitude correction unit (20.2, 120.2) or a phase correction unit (20.3, 120.3).

4. Method for operating a position measuring device, comprising a graduation carrier (14) with a measurement graduation (16, 17), a scanning unit (12) which is movably arranged in a measuring direction relative to the measurement graduation (16, 17) and by means of which position-dependent scanning signals (S0, S90, R) by scanning the measurement graduation (16, 17) are generated, a signal processing unit (20, 120) in which scanning signals (S0, S90, R) are processed to form position signals (P0, P90, PR), and a signal interface (50) by means of which the position signals (P0, P90, PR) are output to downstream electronics (80),
wherein at least one correction unit (20.1, 20.2, 20.3; 120.1, 120.2, 120.3), by means of which at least one signal error of at least one scanning signal (S0, S90, R) is corrected, and a monitoring unit (30, 130), by means of which is detected when a threshold value of the signal error is reached and subsequently at least the correction unit (20.1, 20.2, 20.3; 120.1, 120.2, 120.3) corresponding to this signal error is deactivated, are arranged in the signal processing unit (20, 120), and
wherein the monitoring unit (30) deactivates the correction unit (20.1, 20.2, 20.3) by switching it off, so that the scanning signal (S0, S90, R) is output as the position signal (P0, P90, PR).

5. Method for operating a position measuring device, comprising a graduation carrier (14) with a measurement graduation (16, 17), a scanning unit (12) which is movably arranged in a measuring direction relative to the measurement graduation (16, 17) and by means of which position-dependent scanning signals (S0, S90, R) by scanning the measurement graduation (16, 17) are generated, a signal processing unit (20, 120) in which scanning signals (S0, S90, R) are processed to form position signals (P0, P90, PR), and a signal interface (50) by means of which the position signals (P0, P90, PR) are output to downstream electronics (80),
wherein at least one correction unit (20.1, 20.2, 20.3; 120.1, 120.2, 120.3), by means of which at least one signal error of at least one scanning signal (S0, S90, R) is corrected, and a monitoring unit (30, 130), by means of which is determined when a threshold value of the signal error is reached and subsequently at least the correction unit (20.1, 20.2, 20.3; 120.1, 120.2, 120.3) corresponding to this signal error is deactivated, are arranged in the signal processing unit (20, 120), in particular according to claim 4, and
wherein the monitoring unit (30, 130) reactivates at least the correction unit (20.1, 20.2, 20.3; 120.1, 120.2, 120.3) which triggers the event when a second threshold value (A5) is reached, namely with a desired control value which is adapted to reach a poorer signal quality of the position signals (P0, P90, PR) than with the control up to the first threshold value.

6. Method according to one of claims 4 or 5, wherein the at least one deactivated correction unit (20.1, 20.2, 20.3; 120.1, 120.2, 120.3) is reactivated by switching the position measuring device (10, 100) off and on again.

7. Signal transmission system having a position measuring device (10, 100) according to one of claims 1 to 3, connected to downstream electronics (80), wherein a receiver- end monitoring unit (90) is arranged in the downstream electronics (80) and is adapted to determine when a threshold value of at least one position signal (P0, P90, PR) is reached.

## Revendications

1. Dispositif de mesure de position, comprenant un support de graduation (14) muni d'une graduation de mesure (16, 17), une unité de balayage (12), qui est disposée de manière mobile dans une direction de mesure par rapport à la graduation de mesure (16, 17), pour générer des signaux de balayage (S0, S90, R) dépendant de la position par balayage de la graduation de mesure (16, 17), une unité de traitement de signaux (20, 120) pour transformer les signaux de balayage (S0, S90, R) en signaux de position (P0, P90, PR) et une interface de signaux (50) qui est adaptée pour émettre les signaux de position (P0, P90, PR) à une électronique de suite (80),
dans lequel, dans l'unité de traitement de signaux (20, 120), est agencée au moins une unité de correction (20.1, 20.2, 20.3 ; 120.1, 120.2, 120.3), qui est adaptée pour corriger au moins une erreur de signal d'au moins un signal de balayage (S0, S90, R), ainsi qu'une unité de surveillance (30, 130) qui est adaptée pour déterminer si une valeur limite de l'erreur de signal est atteinte et pour désactiver ensuite au moins l'unité de correction (20.1, 20.2, 20.3 ; 120.1, 120.2, 120.3) correspondant à ladite erreur de signal, et
dans lequel l'unité de correction (20.1, 20.2, 20.3) peut être désactivée par l'unité de surveillance (30) en la déconnectant de manière à ce que le signal de balayage (S0, S90, R) soit délivré en tant que signal de position (P0, P90, PR).

2. Dispositif de mesure de position, comprenant un support de graduation (14) muni d'une graduation de mesure (16, 17), une unité de balayage (12), qui est disposée de manière mobile dans une direction de mesure par rapport à la graduation de mesure (16, 17), pour générer des signaux de balayage (S0, S90, R) dépendant de la position par balayage de la graduation de mesure (16, 17), une unité de traitement de signaux (20, 120) pour transformer les signaux de balayage (S0, S90, R) en signaux de position (P0, P90, PR) et une interface de signaux (50) qui est adaptée pour émettre les signaux de position (P0, P90, PR) à une électronique de suite (80),
dans lequel, dans l'unité de traitement de signaux (20, 120), est agencée au moins une unité de correction (20.1, 20.2, 20.3 ; 120.1, 120.2, 120.3), qui est adaptée pour corriger au moins une erreur de signal d'au moins un signal de balayage (S0, S90, R), ainsi qu'une unité de surveillance (30, 130) qui est adaptée pour déterminer si une valeur limite de l'erreur de signal est atteinte et pour désactiver ensuite au moins l'unité de correction (20.1, 20.2, 20.3 ; 120.1, 120.2, 120.3) correspondant à ladite erreur de signal, en particulier selon la revendication 1, et
dans lequel l'unité de surveillance (30, 130) est en outre adaptée pour réactiver au moins l'unité de correction (20.1, 20.2, 20.3 ; 120.1, 120.2, 120.3) qui déclenche l'événement lorsqu'une deuxième valeur limite (A5) est atteinte et cela, en utilisant une valeur de consigne de la régulation qui est adaptée pour atteindre une moins bonne qualité de signal des signaux de position (P0, P90, PR) qu'avec la régulation jusqu'à la première valeur limite.

3. Dispositif de mesure de position selon l'une des revendications précédentes, dans lequel ladite au moins une unité de correction (20.1, 20.2, 20.3 ; 120.1, 120.2, 120.3) est une unité de correction de décalage (20.1, 120.1), une unité de correction d'amplitude (20.2, 120.2) ou une unité de correction de phase (20.3, 120.3).

4. Procédé de fonctionnement d'un dispositif de mesure de position, comprenant un support de graduation (14) muni d'une graduation de mesure (16, 17), une unité de balayage (12), qui est disposée de manière mobile dans une direction de mesure par rapport à la graduation de mesure (16, 17), et au moyen de laquelle des signaux de balayage (S0, S90, R) dépendant de la position sont générés par balayage de la graduation de mesure (16, 17), une unité de traitement de signaux (20, 120) dans laquelle des signaux de balayage (S0, S90, R) sont transformés en signaux de position (P0, P90, PR) et une interface de signaux (50) au moyen de laquelle les signaux de position (P0, P90, PR) sont émis à une électronique de suite (80),
dans lequel, dans l'unité de traitement de signaux (20, 120), est agencée au moins une unité de correction (20.1, 20.2, 20.3 ; 120.1, 120.2, 120.3), au moyen de laquelle au moins une erreur de signal d'au moins un signal de balayage (S0, S90, R) est corrigée, ainsi qu'une unité de surveillance (30, 130) au moyen de laquelle il est déterminé si une valeur limite de l'erreur de signal est atteinte et ensuite au moins l'unité de correction (20.1, 20.2, 20.3 ; 120.1, 120.2, 120.3) correspondant à ladite erreur de signal est désactivée, et
dans lequel l'unité de surveillance (30) désactive l'unité de correction (20.1, 20.2, 20.3) en la déconnectant de manière à ce que le signal de balayage (S0, S90, R) soit émis en tant que signal de position (P0, P90, PR).

5. Procédé de fonctionnement d'un dispositif de mesure de position, comprenant un support de graduation (14) muni d'une graduation de mesure (16, 17), une unité de balayage (12), qui est disposée de manière mobile dans une direction de mesure par rapport à la graduation de mesure (16, 17), et au moyen de laquelle des signaux de balayage (S0, S90, R) dépendant de la position sont générés par balayage de la graduation de mesure (16, 17), une unité de traitement de signaux (20, 120) dans laquelle des signaux de balayage (S0, S90, R) sont transformés en signaux de position (P0, P90, PR) et une interface de signaux (50) au moyen de laquelle les signaux de position (P0, P90, PR) sont émis à une électronique de suite (80),
dans lequel, dans l'unité de traitement de signaux (20, 120), est agencée au moins une unité de correction (20.1, 20.2, 20.3 ; 120.1, 120.2, 120.3), au moyen de laquelle au moins une erreur de signal d'au moins un signal de balayage (S0, S90, R) est corrigée, ainsi qu'une unité de surveillance (30, 130) au moyen de laquelle il est déterminé si une valeur limite de l'erreur de signal est atteinte et ensuite au moins l'unité de correction (20.1, 20.2, 20.3 ; 120.1, 120.2, 120.3) correspondant à ladite erreur de signal est désactivée, en particulier selon la revendication 4, et
dans lequel au moins l'unité de correction (20.1, 20.2, 20.3 ; 120.1, 120.2, 120.3) qui déclenche l'événement est réactivée par l'unité de surveillance (30, 130) lorsqu'une deuxième valeur limite (A5) est atteinte et cela, en utilisant une valeur de consigne de la régulation qui est adaptée pour atteindre une moins bonne qualité de signal des signaux de position (P0, P90, PR) qu'avec la régulation jusqu'à la première valeur limite.

6. Procédé selon l'une des revendications 4 ou 5, dans lequel ladite au moins une unité de correction désactivée (20.1, 20.2, 20.3 ; 120.1, 120.2, 120.3) est réactivée par déconnexion et reconnexion du dispositif de mesure de position (10, 100).

7. Système de transmission de signaux comportant un dispositif de mesure de position (10, 100) selon l'une des revendications 1 à 3, relié à une électronique de suite (80), dans lequel une unité de surveillance (90) côté récepteur est disposée du côté de l'électronique de suite (80), qui est adaptée pour déterminer si une valeur limite d'au moins un signal de position (P0, P90, PR) est atteinte.
